# EUROPÄISCHE PATENTSCHRIFT

(11) **EP 3 805 054 B1**
(45) Veröffentlichungstag und Bekanntmachung des Hinweises auf die Patenterteilung: **20.03.2024**
(21) Anmeldenummer: 20201177.1
(22) Anmeldetag: 09.10.2020
(51) Int. Cl.: B60R 22/46

(54) **ELEKTROMOTOREINHEIT FÜR EINEN REVERSIBLEN GURTSTRAFFER UND VERFAHREN ZUM BETREIBEN EINES GURTSTRAFFERS**
ELECTROMOTOR UNIT FOR A REVERSIBLE SEAT BELT RETRACTOR AND METHOD FOR OPERATING A SEAT BELT RETRACTOR
UNITÉ ELECTROMOTEUR POUR UN ENROULEUR REVERSIBLE D'UNE CENTURE DE SÉCURITÉ ET PROCÉDÉ DE COMMANDE POUR UN ENROULEUR D'UNE CENTURE DE SÉCURITÉ

(30) Priorität: 09.10.2019 DE 102019127160
(43) Veröffentlichungstag der Anmeldung: 14.04.2021
(73) Patentinhaber: Autoliv Development AB, 447 83 Vårgårda (SE)
(72) Erfinder: JABUSCH, Ronald, D-25336 Elmshorn (DE)
(74) Vertreter: Feucker, Max Martin

(56) Entgegenhaltungen:
- EP-A1- 0 629 531
- EP-A1- 1 658 208
- EP-A1- 1 878 626
- EP-B1- 1 658 208
- WO-A1-99/59848
- DE-A1-102004 054 078
- DE-A1-102007 058 279
- DE-A1-102012 106 039

## Beschreibung

Die vorliegende Erfindung betrifft einen reversiblen Gurtstraffer mit einer Gurtwelle und einer Elektromotoreinheit zum Antrieb der Gurtwelle, wobei die Elektromotoreinheit einen einen Rotor aufweisenden Elektromotor umfasst, wobei der Rotor mit einer Welle gekoppelt ist und die Welle durch den Elektromotor zu einer Drehbewegung antreibbar ist. Die Erfindung betrifft auch ein Verfahren zum Betreiben eines reversiblen Gurtstraffers.

Als reversible Gurtstraffer werden solche Gurtstraffer bezeichnet, die einen Elektromotor aufweisen, mit dem der Gurtaufroller verbunden ist. Hierzu ist die Welle der Elektromotoreinheit über ein (Gurtstraffer-)Getriebe mit der Gurtwelle des Gurtaufrollers verbunden. Ein solcher reversibler Gurtstraffer ist beispielsweise aus DE 10 2009 010 093 A1 bekannt.

Aufgrund der fehlenden Dynamik der Elektromotoren werden zusätzlich zu der Elektromotoreinheit für verschiedene Lastfälle häufig zusätzliche pyrotechnische Straffer eingesetzt, die bei Bedarf unmittelbar auf die Gurtwelle des Gurtaufrollers wirken. Es ist also neben der Elektromotoreinheit noch ein zusätzlicher pyrotechnischer Straffer vorzusehen. Ein solcher Gurtstraffer ist beispielsweise aus der gattungsgemäßen WO 99/59848 A1 und DE 10 2004 0054 078 A1 bekannt.

Aufgabe der vorliegenden Erfindung ist es daher, die mit Bezug zum Stand der Technik geschilderten Nachteile zu beseitigen und insbesondere einen reversiblen Gurtstraffer anzugeben, bei dem auf einen zusätzlichen pyrotechnischen Straffer, der unmittelbar auf die Gurtwelle des Gurtaufrollers wirkt, verzichtet werden kann.

Gelöst wird die Aufgabe durch einen reversiblen Gurtstraffer mit den Merkmalen des unabhängigen Anspruchs 1 sowie durch ein Verfahren zum Betreiben eines reversiblen Gurtstraffers mit den Merkmalen des entsprechenden Verfahrensanspruchs 12 wobei vorteilhafte Weiterbildungen des Gurtstraffers und des Verfahrens in den abhängigen Ansprüchen und in der Beschreibung angegeben sind und einzelne Merkmale der vorteilhaften Weiterbildungen in technisch sinnvoller Weise miteinander kombinierbar sind. Insbesondere sind die mit Bezug zu Gurtstraffer offenbarten Merkmale auf das Verfahren anwendbar und umgekehrt.

Gelöst wird die Aufgabe durch einen reversiblen Gurtstraffer mit den eingangs genannten Merkmalen, wobei die Beschleunigungseinrichtung mindestens ein mit der Welle gekoppeltes oder koppelbares Getriebe umfasst, wobei das Getriebe ein von einem pyrotechnischen Gasgenerator in eine Linearbewegung antreibbares, erstes Getriebeelement und ein von dem ersten Getriebeelement zu einer Drehbewegung antreibbares zweites Getriebeelement umfasst.

Gelöst wird die Aufgabe auch durch einen reversiblen Gurtstraffer mit einer Gurtwelle und einer erfindungsgemäßen Elektromotoreinheit zum Antrieb der Gurtwelle. Hierbei ist die gegebenenfalls durch die Beschleunigungseinrichtung zusätzlich zu beschleunigende Welle der Elektromotoreinheit gegebenenfalls über ein (Gurtstraffer-)Getriebe mit der Gurtwelle gekoppelt, das die Drehbewegung der gegebenenfalls von der Beschleunigungseinrichtung zusätzlich beschleunigten Welle des Elektromotors auf die Gurtwelle überträgt.

Ein pyrotechnischer Antrieb kann unmittelbar auf die direkt vom Elektromotor angetriebene Welle bei Bedarf wirken. Mit einem solchen pyrotechnischen Antrieb kann kurzzeitig eine zusätzliche Beschleunigung auf die Welle erzeugt werden. Mit "zusätzlich" ist also gemeint, dass die Welle von dem Rotor des Elektromotors angetrieben werden kann, wobei eine Beschleunigung der Welle entweder gleichzeitig oder zeitlich versetzt zu der Beschleunigung mittels des Rotors durch die Beschleunigungseinrichtung erfolgen kann.

So kann beispielsweise das anfängliche Trägheitsmoment des Elektromotors überwunden werden, wodurch der Elektromotor schnell auf hohe Drehzahlen gebracht werden kann. Es kann aber auch sein, dass die Beschleunigungseinrichtung zum Abbremsen der Welle der Elektromotoreinheit eingesetzt wird.

Prinzipiell ist also die Beschleunigungseinrichtung während des normalen Betriebs der Elektromotoreinheit nicht mit der Welle gekoppelt, übt also kein(e) Kraft/Drehmoment auf die Welle aus. Lediglich bei Bedarf kann die Beschleunigungseinrichtung kurzzeitig ein Drehmoment bereitstellen, wozu die Beschleunigungseinrichtung mit der Welle gekoppelt wird.

Die Elektromotoreinheit ist dabei insbesondere so eingerichtet, dass der den Elektromotor versorgende Stromkreis während des Wirkens der Beschleunigungseinrichtung offen geschaltet ist, um eine Strominduktion zu verhindern.

Die Elektromotoreinheit oder der Gurtstraffer sind also insbesondere so ausgebildet und/oder eingerichtet, dass die Beschleunigungseinrichtung nach einer Auslösung des pyrotechnischen Antriebs nur für eine vergleichsweise kurze Zeit (beispielsweise für weniger als 10 ms, bevorzugt für weniger als 3 ms) und/oder nur für wenige Umdrehungen (beispielsweise für weniger als 2, bevorzugt für weniger als 1, besonders bevorzugt für weniger als 0,5 vollständige Umdrehungen der Welle) auf die Welle beschleunigend wirkt.

Für eine solche Beschleunigung der Welle ist es ausreichend, wenn der pyrotechnische Antrieb eine vergleichsweise kleine Gasladung von 30 bis 150 mg, bevorzugt von 50 bis 120 mg aufweist. Der Gasgenerator eines pyrotechnischen Antriebs weist in der Regel gepresste Mikrocellulose auf, die von einem Zünder zur Gaserzeugung aktiviert wird. Die Gasladung entspricht dabei insbesondere der Menge der gepressten Mikrocellulose des pyrotechnischen Antriebs. Bei einer solchen geringen Gasladung kann das Gehäuse des pyrotechnischen Antriebs aus Kunststoff und somit günstig gefertigt sein.

Um eine Flammenentwicklung zu vermeiden, kann der pyrotechnische Antrieb ein Expansionselement aufweisen, das gasdicht an dem Gasgenerator des pyrotechnischen Antriebs gehalten ist und dass nach dem Auslösen des Gasgenerators expandiert und durch die Expansion ein Element der Beschleunigungseinrichtung antreibt. Das Expansionselement kann beispielsweise als Topf ausgebildet sein, dessen Stirnseite nach innen gestülpt ist. Der Topf ist somit durch die nach innen gefaltete Stirnseite expandierbar ausgebildet, ohne selbst elastisch zu sein. Durch Auslösung des Gasgenerators und das dann in den Topf strömende Gas wird die Stirnseite nach außen gestülpt, wodurch der Topf expandiert. Somit kann mit einem sehr kleinen Topf eine im Verhältnis zu der Größe des Topfes große Expansionsbewegung erzielt werden. Der Topf selbst kann aus einem dünnen Stahlblech von vorzugsweise 0,3 bis 0,6 mm Stärke gefertigt werden, so dass er die nötige Festigkeit aufweist, um dem Druck des erzeugten Gasstromes auch im aufgeweiteten Zustand Stand zu halten.

Erfindungsgemäß umfasst die Beschleunigungseinrichtung mindestens ein mit der Welle gekoppeltes Getriebe, wobei das Getriebe ein von einem pyrotechnischen Gasgenerator in eine Linearbewegung antreibbares, erstes Getriebeelement und ein von dem ersten Getriebeelement zu einer Drehbewegung antreibbares zweites Getriebeelement umfasst. Mit dem pyrotechnischen Gasgenerator kann also das erste Getriebeelement linear stark beschleunigt werden, wobei das zweite Getriebeelement die lineare Bewegung des ersten Getriebeelements in eine auf die Welle der Elektromotoreinheit wirkende Drehbewegung übersetzt. Hierbei wirkt insbesondere der sich nach außen stülpende Topf auf das erste Getriebeelement.

Das Getriebe umfasst bevorzugt eine von einem pyrotechnischen Gasgenerator antreibbare Zahnstange als erstes Getriebeelement. Hierzu kann die Zahnstange beispielsweise einen kolbenförmigen Abschnitt aufweisen, der in einem Zylinder angeordnet ist und beim Auslösen des pyrotechnischen Gasgenerators linear angetrieben wird.

Das Getriebe weist ein mit der Welle koppelbares oder gekoppeltes Zahnrad als zweites Getriebeelement auf.

Die Zahnstange wäre dabei so ausgebildet, dass sie wenigstens der während von dem pyrotechnischen Gasgenerator erzeugten linearen Bewegung mit dem Zahnrad in Eingriff steht, so dass die lineare Bewegung der Zahnstange in eine Rotationsbewegung des Zahnrades übersetzt wird, wodurch die Welle angetrieben wird.

Bevorzugt ist vorgesehen, dass die Beschleunigungseinrichtung ausschließlich während der zusätzlichen Beschleunigung mit der Welle gekoppelt ist.

Hierzu kann beispielsweise vorgesehen sein, dass das erste Getriebeelement, bevorzugt in Form der Zahnstange, ausschließlich während seiner (linearen) Bewegung mit dem zweiten Getriebeelement, bevorzugt in Form des Zahnrads, gekoppelt ist. So kann beispielsweise vorgesehen sein, dass in einem Ausgangszustand das erste Getriebeelement (Zahnstange) und das zweite Getriebeelement (Zahnrad) nicht gekoppelt sind, so dass das zweite Getriebeelement mit der Welle frei drehen kann.

Alternativ könnte vorgesehen sein, dass das zweite Getriebeelement (Zahnrad) erst bei Auslösung des pyrotechnischen Antriebes mit der Welle gekoppelt ist, so dass die Welle sich im Ausgangszustand relativ zu dem zweiten Getriebeelement drehen kann.

Allgemein wird also vorgeschlagen, dass wenigstens ein Getriebeelement so ausgebildet und/oder angeordnet ist, dass das Getriebeelement nur während seiner durch den pyrotechnischen Gasgenerator erzeugten Bewegung mit der Welle gekoppelt ist.

Um die Zahnstange nur während ihrer linearen Bewegung mit dem Zahnrad zu koppeln, kann beispielsweise vorgesehen sein, dass die Zahnstange und/oder ein Gehäuse eine Anlaufschräge aufweist, die während der durch den pyrotechnischen Gasgenerator erzeugten Linearbewegung eine quer zu der Linearbewegung gerichtete Kippbewegung zur Kopplung der Zahnstange mit dem Zahnrad bedingt. Die Zahnstange führt also aufgrund der insbesondere mit einer an einem Gehäuse ausgebildeten (Anlauf-)Schräge zusammenwirkenden Anlaufschräge eine Kippbewegung aus, wodurch die Zahnstange mit dem Zahnrad gekoppelt wird. Bei der folgenden Linearbewegung bleibt also eine Kopplung zwischen Zahnstange und Zahnrad insbesondere aufgrund der geometrischen Ausbildung der Zahnstange und des Gehäuses bestehen, wobei es zum Abschluss der Linearbewegung bevorzugt ist, dass die Zahnstange außer Eingriff mit dem Zahnrad kommt.

Hierzu ist insbesondere ein Federelement vorgesehen, welches eine entgegen der Kopplungsstellung gerichtete Kraft auf die Zahnstange ausübt. Das Federelement greift dazu insbesondere in eine Bohrung, die sich bevorzugt in Längsrichtung der Zahnstange erstreckt, ein. Das Federelement kann dabei auch bedingen, dass die Zahnstange am Ende ihrer Linearbewegung außer Eingriff mit dem Zahnrad gelangt. Das Federelement ist dabei insbesondere auf einer dem pyrotechnischen Antrieb gegenüberliegenden Seite des ersten Getriebeelements angeordnet. Vor dem Auslösen des pyrotechnischen Antriebs ist die Feder bevorzugt in Anlage mit der Öffnung der Bohrung und hält somit das erste Getriebeelement (Zahnstange) außer Eingriff mit den Zähnen des zweiten Getriebeelement (Zahnrad). Am Ende der Linearbewegung ist die Feder weitestgehend in voller Länge in der Bohrung der Zahnstange angeordnet und bringt diese außer Eingriff mit dem Zahnrad.

In diesem Zusammenhang kann insbesondere vorgesehen sein, dass die Zahnstange am Anfang der (linearen) Bewegung mit einer ersten Schulter einer Anlaufschräge und am Ende der (linearen) Bewegung mit einer zweiten, der ersten Schulter abgewandten Schulter der Anlaufschräge wechselwirkt, sodass die Zahnstange nur zwischen der Wechselwirkung mit der ersten Schulter und der zweiten Schulter mit dem Zahnrad gekoppelt ist. Die Länge/Dauer der Kopplung zwischen der Zahnstange und dem Zahnrad wird also durch die geometrische Länge der Zahnstange vorgegeben.

Insbesondere um eine solche Entkopplung der Zahnstange (erstes Getriebeelement) mit dem Zahnrad (zweites Getriebeelement) am Ende der Linearbewegung zu erreichen, kann vorgesehen sein, dass ein von einem pyrotechnischen Gasgenerator angetriebenes Element (erstes Getriebeelement/Zahnstange) einen kolbenförmigen Abschnitt aufweist, der im Ausgangszustand in einem Zylinder angeordnet ist, wobei eine Länge des kolbenförmigen Abschnitts und/oder des Zylinders so dimensioniert ist/sind, dass der kolbenförmige Abschnitt nach Abschluss des zusätzlichen Beschleunigungsvorganges (also am Ende der linearen Bewegung) außerhalb des Zylinders angeordnet ist. Dabei kann der oben beschriebene Topf des pyrotechnischen Antriebs im Ausgangszustand innerhalb des Zylinders des pyrotechnischen Gasgenerators angeordnet sein und mit seinem eingestülpten Abschnitt den kolbenförmigen Abschnitt der Kolbenstange aufnehmen, wobei sich der Topf bei Zündung des Gasgenerators bis außerhalb des Zylinders ausstülpt und so den kolbenförmigen Abschnitt aus den Zylinder treibt.

Für einen kompakten Aufbau ist es vorteilhaft, wenn die Beschleunigungseinrichtung ein Gehäuse umfasst, in dem der mindestens eine pyrotechnische Gasgenerator und die Elemente des Getriebes angeordnet sind. In dem Gehäuse ist insbesondere eine Aussparung für die Welle ausgebildet, so dass die Beschleunigungseinrichtung einfach auf die Welle aufgesteckt werden kann. Dabei ist insbesondere das zweite Getriebeelement (Zahnrad) so in dem Gehäuse angeordnet, dass in der aufgeschobenen Stellung eine drehfeste Kopplung von Zahnrad und Welle vorliegt.

In einer Ausführungsform weist genau eine Beschleunigungseinrichtung zwei pyrotechnische Gasgeneratoren auf. Jeder pyrotechnische Gasgenerator treibt bevorzugt jeweils ein (erstes) Getriebeelement an, wobei jedes Getriebeelement mit dem genau einen weiteren (zweiten) Getriebeelement (beispielsweise Zahnrad) gekoppelt beziehungsweise koppelbar ist. Es kann dabei vorgesehen sein, dass beide ersten Getriebeelemente in der gleichen Drehrichtung auf das zweite Getriebeelement wirken. Es kann aber auch sein, dass die beiden ersten Getriebeelemente so angeordnet sind, dass sie in unterschiedlicher Drehrichtung auf das zweite Getriebeelement wirken können, so dass sowohl eine Beschleunigung als auch eine Abbremsung mit der Beschleunigungseinrichtung möglich ist.

Zudem kann auch vorgesehen sein, dass mehrere Beschleunigungseinrichtungen vorgesehen sind, die insbesondere räumlich gesehen hintereinander auf die Welle aufgebracht sind.

Die Aufgabe wird insbesondere auch gelöst durch ein Verfahren zum Betreiben eines zuvor beschriebenen Gurtstraffers, welcher eine Gurtwelle und eine Elektromotoreinheit zum Antrieb der Gurtwelle aufweist, wobei die Elektromotoreinheit einen mit einer Welle gekoppelten Rotor aufweisenden Elektromotor und mindestens eine mindestens einen pyrotechnischen Antrieb umfassende Beschleunigungseinrichtung aufweist, umfassend zumindest die folgenden Schritte:
- Antreiben der Gurtwelle mittels des Elektromotors,
- Zünden des pyrotechnischen Antriebs zur kurzzeitigen Beschleunigung der Welle.

Hierbei wird der pyrotechnische Antrieb insbesondere zum Beschleunigen der Welle des Elektromotors aus der Ruhelage eingesetzt, wobei der Elektromotor die Gurtwelle anschließend auf Betriebsdrehzahl beschleunigt. Die Beschleunigung der Welle mittels des pyrotechnischen Antriebs erfolgt insbesondere unmittelbar nachdem der Elektromotor bereits aufgrund einer durch eine Steuerung erkannte Gefahrensituation mit einem Motorstrom beaufschlagt wurde.

Nach der anfänglichen Beschleunigung durch den pyrotechnischen Antrieb kann die Gurtwelle mittels des Elektromotors reversibel gestrafft werden.

Die Beschleunigung der Welle durch den pyrotechnischen Antrieb dauert bevorzugt weniger als 10 ms, bevorzugt weniger als 3 ms. Die Welle wird dabei für weniger als 2, bevorzugt für weniger als 1, besonders bevorzugt für weniger als 0,5 vollständige Umdrehungen durch den pyrotechnischen Antrieb beschleunigt. Insbesondere wird der pyrotechnische Antrieb innerhalb von weniger als 1ms bevorzugt von weniger als 0, 5 ms nach der initialen Bestromung des Elektromotors gezündet.

Die Erfindung sowie das technische Umfeld werden im Folgenden anhand der Figuren beispielhaft erläutert. Es zeigen schematisch
- Figur 1:: eine erste Ausführungsform einer Elektromotoreinheit in Perspektivansicht,
- Figur 2:: eine teilweise Explosionsansicht der Elektromotoreinheit gemäß Figur 1,
- Figur 3:: eine Schnittdarstellung durch eine Beschleunigungseinrichtung der Elektromotoreinheit gemäß Figur 1 in einem Ausgangszustand,
- Figur 4:: die Schnittansicht gemäß Figur 3 während einer Beschleunigung durch die Beschleunigungseinrichtung,
- Figur 5:: die Schnittansicht gemäß Figur 3 nach der Beschleunigung,
- Figur 6:: eine Perspektivansicht einer weiteren Ausführungsform der Elektromotoreinheit und
- Figur 7:: eine teilweise Explosionsansicht der zweiten Ausführungsform gemäß Figur 6.

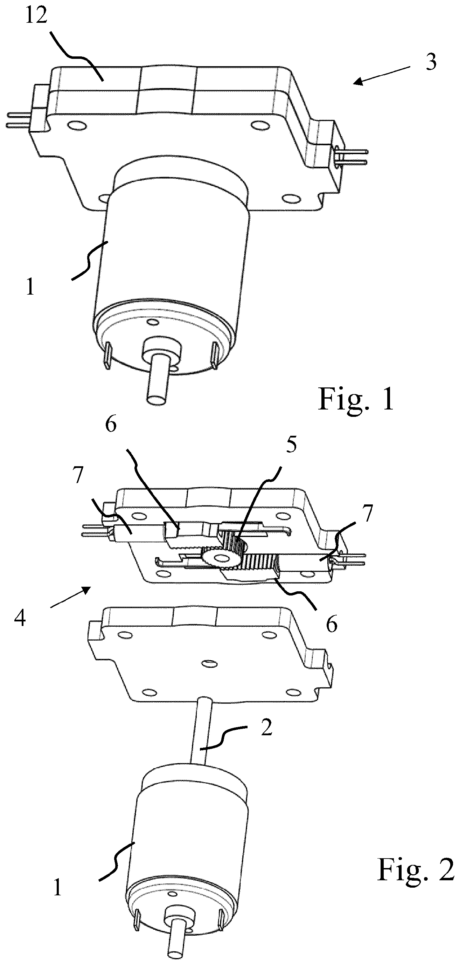

In den Figuren 1 und 2 ist eine Elektromotoreinheit mit einem Elektromotor 1, einer mit einem Rotor des Elektromotors 1 gekoppelte Welle 2 und eine Beschleunigungseinrichtung 3 dargestellt. Die Beschleunigungseinrichtung 3 weist ein Gehäuse 12 auf, in dem ein Zahnrad 5 drehbar gelagert ist. In dem Gehäuse 12 sind ferner zwei Zahnstangen 6 und zwei pyrotechnische Gasgeneratoren 7 angeordnet.

In dem in der Figur 1 dargestellten Zustand durchgreift die Welle 2 das Gehäuse 12 der Beschleunigungseinrichtung 3, wobei die Welle 2 drehfest mit dem Zahnrad 5 gekoppelt ist.

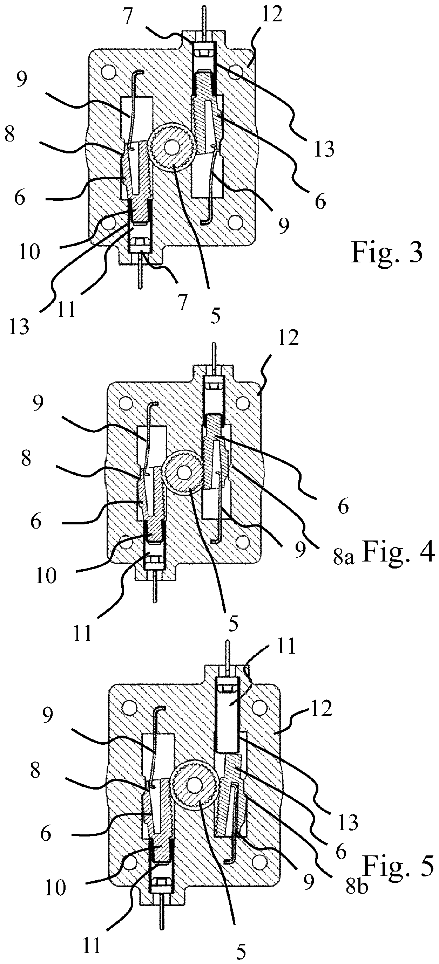

Aus Figur 3 ist nun zu erkennen, dass in dem dort dargestellten Ausgangszustand die Zahnstangen 6 mit einem kolbenförmigen Abschnitt 10 jeweils in einem Zylinder 11 angeordnet sind, in dem auch jeweils ein Gasgenerator 7 angeordnet ist. Mit dem Gasgenerator 7 ist ein Topf 13 verbunden, dessen Stirnseite in sich selbst und damit auch in den Zylinder 11 gestülpt ist. Der eingestülpte Abschnitt des Topfes 13 nimmt den kolbenförmigen Abschnitt 10 auf. Es ist auch zu erkennen, dass die Zahnstangen 6 aufgrund der von einem Federelement 9 bereitgestellten Kraft außer Eingriff mit dem Zahnrad 5 sind, da die Zahnstange 6 leicht gegenüber der axialen Achse des Zylinders 11 verkippt ist.

Um nun mittels der Beschleunigungseinrichtung 3 die Welle 2 zu beschleunigen, wird der in den Figuren 3 bis 5 rechts dargestellte Gasgenerator 7 gezündet. Das entstehende Gas bedingt ein Ausstülpen des Topfes 13 und treibt so den kolbenförmigen Abschnitt 10 und damit die Zahnstange 6 an, wobei eine Bewegung der dort rechts dargestellten Zahnstange 6 in den Figuren 3 bis 5 nach unten erfolgt.

In Figur 4 ist nun die Stellung der Zahnstange 6 (auf der rechten Seite der Figur 4) während dieser Bewegung dargestellt. Aufgrund der ersten Schulter 8a der Anlaufschräge 8 hat die Zahnstange 6 eine Kippbewegung entgegen der von dem Federelement 9 bereitgestellten Kraft in Richtung des Zahnrades 5 ausgeführt, wodurch die Zahnstange 6 mit dem Zahnrad 5 gekoppelt ist. Während der linearen Bewegung der Zahnstange 6 erfolgt also eine Übersetzung in eine Drehbewegung des Zahnrades 5.

Der Zustand der Beschleunigungseinrichtung 3 am Ende des Beschleunigungsvorganges ist nun in Figur 5 dargestellt. Die Zahnstange 6 wird nun erneut aufgrund der von dem Federelement 9 bereitgestellten Kraft verkippt, so dass die Zahnstange 6 außer Eingriff mit dem Zahnrad 5 ist. Dies ist insbesondere dadurch möglich, dass am Ende des Beschleunigungsvorganges der kolbenförmige Abschnitt 10 nicht mehr in Eingriff mit dem Zylinder 11 ist. Die Zahnstange 6 liegt zudem an der zweiten Schulter 8b der Anlaufschräge 8 des Gehäuses 12 an.

Um nun eine weitere Beschleunigung auf die Welle 2 auszuüben, könnte der in den Figuren 3 bis 5 links dargestellte pyrotechnische Gasgenerator 7 gezündet werden.

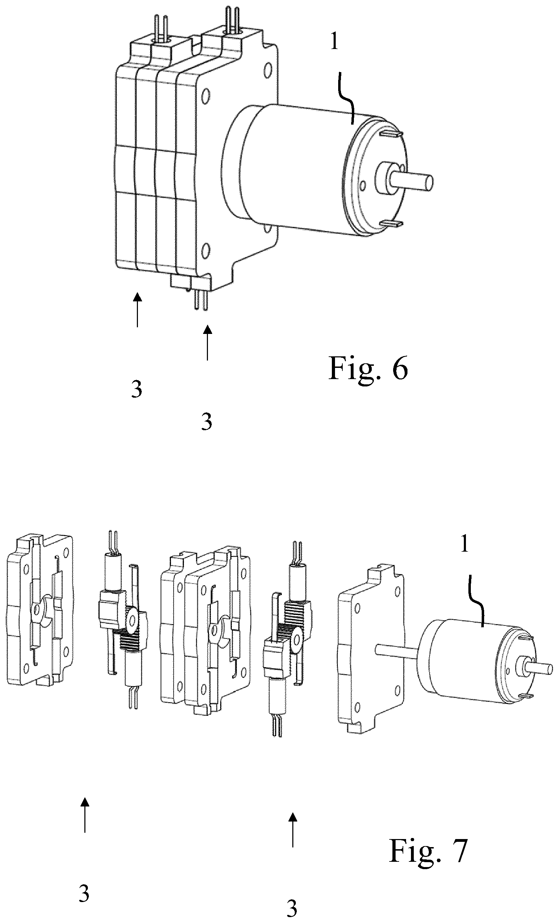

Gemäß dem in den Figuren 6 bis 7 dargestellten Ausführungsbeispiel sind zwei der zuvor erläuterten Beschleunigungseinrichtungen 3 mit der Welle 2 gekoppelt. Es können also insgesamt vier Gasgeneratoren gezündet werden. Aus den Figuren ist auch zu erkennen, dass die Beschleunigungseinrichtungen 3 in entgegengesetzter Richtung auf die Welle 2 wirken. Mit der einen Beschleunigungseinrichtung 3 kann also die Welle abgebremst werden, während mit der anderen Beschleunigungseinrichtung 3 die Welle positiv beschleunigt werden kann.

### Bezugszeichenliste

- 1: Elektromotor
- 2: Welle
- 3: Beschleunigungseinrichtung
- 4: Getriebe
- 5: Zahnrad
- 6: Zahnstange
- 7: pyrotechnischer Gasgenerator
- 8: Anlaufschräge
- 8a: erste Schulter
- 8b: zweite Schulter
- 9: Federelement
- 10: kolbenförmiger Abschnitt
- 11: Zylinder
- 12: Gehäuse
- 13: Topf

## Patentansprüche

1. Reversibler Gurtstraffer mit
- einer Gurtwelle und
- einer Elektromotoreinheit zum Antrieb der Gurtwelle, wobei
die Elektromotoreinheit einen einen Rotor aufweisenden Elektromotor (1) umfasst, wobei der Rotor mit einer Welle (2) gekoppelt ist und die Welle (2) durch den Elektromotor zu einer Drehbewegung antreibbar ist, wobei die Welle (2) der Elektromotoreinheit mit der Gurtwelle gekoppelt ist, wobei
die Elektromotoreinheit mindestens eine Beschleunigungseinrichtung (3) zur Beschleunigung der Welle (2) aufweist, wobei die Beschleunigungseinrichtung (3) mindestens einen pyrotechnischen Antrieb aufweist, wobei der pyrotechnische Antrieb unmittelbar auf die direkt vom Elektromotor (1) angetriebene Welle (2) der Elektromotoreinheit wirken kann, so dass der pyrotechnische Antrieb zum Beschleunigen der Welle (2) des Elektromotors (1) aus einer Ruhelage einsetzbar ist, wobei die Gurtwelle anschließend mittels des Elektromotors auf Betriebsdrehzahl beschleunigbar ist, **dadurch gekennzeichnet, dass**
die Beschleunigungseinrichtung (3) mindestens ein mit der Welle (2) gekoppeltes oder koppelbares Getriebe (4) umfasst,
wobei das Getriebe (4) ein von einem pyrotechnischen Gasgenerator (7) in eine Linearbewegung antreibbares, erstes Getriebeelement und ein von dem ersten Getriebeelement zu einer Drehbewegung antreibbares zweites Getriebeelement umfasst.

2. Reversibler Gurtstraffer nach Anspruch 1 wobei mindestens ein Getriebe (4) ein mit der Welle gekoppeltes oder koppelbares Zahnrad (5) aufweist.

3. Reversibler Gurtstraffer nach einem der Ansprüche 1 oder 2, wobei mindestens ein Getriebe (4) eine von einem pyrotechnischen Gasgenerator (7) antreibbare Zahnstange (6) umfasst.

4. Reversibler Gurtstraffer nach einem der Ansprüche 1 bis 3, wobei die Beschleunigungseinrichtung (3) ausschließlich während der zusätzlichen Beschleunigung mit der Welle (2) gekoppelt ist.

5. Reversibler Gurtstraffer nach Anspruch 4, wobei ein Getriebeelement (5, 6) so ausgebildet und/oder angeordnet ist, dass das Getriebeelement (5, 6) nur während seiner durch den pyrotechnischen Gasgenerator (7) erzeugten Bewegung mit der Welle (2) gekoppelt ist.

6. Reversibler Gurtstraffer nach Anspruch 4 oder 5, wobei die Zahnstange (6) und/oder ein Gehäuse (12) eine Anlaufschräge (8) aufweist, die während der durch den pyrotechnischen Gasgenerator (7) erzeugten Linearbewegung eine quer zu der Linearbewegung gerichtete Kippbewegung zur Kopplung der Zahnstange (6) mit dem Zahnrad (5) bedingt.

7. Reversibler Gurtstraffer nach Anspruch 6, wobei ein Federelement (9) eine entgegen der Kopplungsstellung gerichtete Kraft auf die Zahnstange (6) ausübt.

8. Reversibler Gurtstraffer nach Anspruch 7, wobei das Federelement (9) in eine Bohrung der Zahnstange (6) eingreift.

9. Reversibler Gurtstraffer nach einem der Ansprüche 1 bis 8, wobei ein von einem pyrotechnischen Gasgenerator (7) angetriebenes Element einen kolbenförmigen Abschnitt (10) aufweist, der in einem Zylinder (11) angeordnet ist, wobei eine Länge des kolbenförmigen Abschnitts (10) und/oder des Zylinders (11) so dimensioniert ist/sind, dass der kolbenförmige Abschnitt (10) nach Abschluss des zusätzlichen Beschleunigungsvorgangs außerhalb des Zylinders (11) angeordnet ist.

10. Reversibler Gurtstraffer nach einem der Ansprüche 1 bis 9, wobei mehrere Beschleunigungseinrichtungen (3) vorgesehen sind.

11. Reversibler Gurtstraffer nach einem der vorhergehenden Ansprüche, wobei ein die Drehbewegung der Welle (2) des Elektromotors auf die Gurtwelle übertragendes Gurtstraffergetriebe vorgesehen ist.

12. Verfahren zum Betreiben eines reversiblen Gurtstraffers nach einem der vorhergehenden Ansprüche, welcher eine Gurtwelle und eine Elektromotoreinheit zum Antrieb der Gurtwelle aufweist, wobei die Elektromotoreinheit einen mit einer Welle (2) gekoppelten Rotor aufweisenden Elektromotor (1) und mindestens eine mindestens einen pyrotechnischen Antrieb umfassende Beschleunigungseinrichtung (3) aufweist, wobei die Welle (2) der Elektromotoreinheit (1) mit der Gurtwelle gekoppelt ist, umfassend zumindest die folgenden Schritte:
- Zünden des pyrotechnischen Antriebs zur kurzzeitigen Beschleunigung der Welle (2) aus einer Ruhelage, wobei die Gurtwelle anschließend mittels des Elektromotors auf Betriebsdrehzahl beschleunigt wird
- Antreiben der Gurtwelle mittels des Elektromotors (1),.

## Claims

1. Reversible belt tensioner, comprising
- a belt shaft, and
- an electric motor unit for driving the belt shaft, the electric motor unit comprising an electric motor (1) having a rotor, the rotor being coupled to a shaft (2), and the shaft (2) being drivable by the electric motor to a rotational movement, the shaft (2) of the electric motor unit being coupled to the belt shaft,
the electric motor unit having at least one acceleration device (3) for accelerating the shaft (2), the acceleration device (3) having at least one pyrotechnic drive, the pyrotechnic drive being able to act directly on the shaft (2) of the electric motor unit, which electric motor unit is driven directly by the electric motor (1), so that the pyrotechnic drive can be used to accelerate the shaft (2) of the electric motor (1) out of a rest position, the belt shaft subsequently being able to be accelerated to operating speed by means of the electric motor, **characterized in that**
the acceleration device (3) comprises at least one gear mechanism (4) which is or can be coupled to the shaft (2),
the gear mechanism (4) comprising a first gear element which can be driven into a linear movement by means of a pyrotechnic gas generator (7) and a second gear element which can be driven into a rotational movement by means of the first gear element.

2. Reversible belt tensioner according to claim 1, wherein at least one gear mechanism (4) has a gearwheel (5) which is or can be coupled to the shaft.

3. Reversible belt tensioner according to either claim 1 or claim 2, wherein at least one gear mechanism (4) comprises a rack (6) which can be driven by a pyrotechnic gas generator (7).

4. Reversible belt tensioner according to any of claims 1 to 3, wherein the acceleration device (3) is coupled to the shaft (2) exclusively during additional acceleration.

5. Reversible belt tensioner according to claim 4, wherein a gear element (5, 6) is designed and/or arranged such that the gear element (5, 6) is coupled to the shaft (2) only during its movement generated by the pyrotechnic gas generator (7).

6. Reversible belt tensioner according to either claim 4 or claim 5, wherein the rack (6) and/or a housing (12) has a run-on slope (8) which, during the linear movement generated by the pyrotechnic gas generator (7), causes a tilting movement, which is transverse to the linear movement, in order to couple the rack (6) to the gearwheel (5).

7. Reversible belt tensioner according to claim 6, wherein a spring element (9) exerts a force, directed against the coupling position, onto the rack (6).

8. Reversible belt tensioner according to claim 7, wherein the spring element (9) engages into a hole in the rack (6).

9. Reversible belt tensioner according to any of claims 1 to 8, wherein an element which is driven by a pyrotechnic gas generator (7) has a piston-shaped portion (10) which is arranged in a cylinder (11), wherein a length of the piston-shaped portion (10) and/or a length of the cylinder (11) is/are dimensioned such that the piston-shaped portion (10) is arranged outside the cylinder (11) after the additional acceleration process is completed.

10. Reversible belt tensioner according to any of claims 1 to 9, wherein a plurality of acceleration devices (3) are provided.

11. Reversible belt tensioner according to any of the preceding claims, wherein a belt tensioner gear mechanism which transmits the rotational movement from the shaft (2) of the electric motor to the belt shaft is provided.

12. Method for operating a reversible belt tensioner according to any of the preceding claims, comprising a belt shaft and an electric motor unit for driving the belt shaft, wherein the electric motor unit has an electric motor (1) which is coupled to a shaft (2), and at least one acceleration device (3) comprising at least one pyrotechnic drive, wherein the shaft (2) of the electric motor unit (1) is coupled to the belt shaft, comprising at least the following steps:
- igniting the pyrotechnic drive for short-term acceleration of the shaft (2) out of a rest position, wherein the belt shaft is subsequently accelerated to operating speed by means of the electric motor
- driving the belt shaft by means of the electric motor (1).

## Revendications

1. Tendeur de ceinture réversible comportant
- un arbre de ceinture et
- une unité à moteur électrique permettant d'entraîner l'arbre de ceinture, dans lequel l'unité à moteur électrique comprend un moteur électrique (1) présentant un rotor, dans lequel le rotor est accouplé à un arbre (2) et l'arbre (2) peut être entraîné par le moteur électrique dans un mouvement de rotation, dans lequel l'arbre (2) de l'unité à moteur électrique est accouplé à l'arbre de ceinture, dans lequel
l'unité à moteur électrique présente au moins un dispositif d'accélération (3) permettant l'accélération de l'arbre (2), dans lequel le dispositif d'accélération (3) présente au moins un entraînement pyrotechnique, dans lequel l'entraînement pyrotechnique peut agir immédiatement sur l'arbre (2) de l'unité à moteur électrique, lequel arbre est entraîné directement par le moteur électrique (1), de sorte que l'entraînement pyrotechnique peut être utilisé pour l'accélération de l'arbre (2) du moteur électrique (1) à partir d'une position de repos, dans lequel l'arbre de ceinture peut ensuite être accéléré au moyen du moteur électrique pour atteindre la vitesse de rotation de fonctionnement, **caractérisé en ce que**
le dispositif d'accélération (3) comprend au moins une transmission (4) accouplée ou pouvant être accouplée à l'arbre (2),
dans lequel la transmission (4) comprend un premier élément de transmission pouvant être entraîné dans un mouvement linéaire par un générateur de gaz pyrotechnique (7) et un second élément de transmission pouvant être entraîné dans un mouvement de rotation par le premier élément de transmission.

2. Tendeur de ceinture réversible selon la revendication 1, dans lequel au moins une transmission (4) présente une roue dentée (5) accouplée ou pouvant être accouplée à l'arbre.

3. Tendeur de ceinture réversible selon l'une des revendications 1 ou 2, dans lequel au moins une transmission (4) comprend une crémaillère (6) pouvant être entraînée par un générateur de gaz pyrotechnique (7).

4. Tendeur de ceinture réversible selon l'une des revendications 1 à 3, dans lequel le dispositif d'accélération (3) est accouplé à l'arbre (2) exclusivement pendant l'accélération supplémentaire.

5. Tendeur de ceinture réversible selon la revendication 4, dans lequel un élément de transmission (5, 6) est conçu et/ou disposé de telle sorte que l'élément de transmission (5, 6) est accouplé à l'arbre (2) uniquement pendant son mouvement engendré par le générateur de gaz pyrotechnique (7).

6. Tendeur de ceinture réversible selon la revendication 4 ou 5, dans lequel la crémaillère (6) et/ou un boîtier (12) présentent un chanfrein de démarrage (8) qui, pendant le mouvement linéaire engendré par le générateur de gaz pyrotechnique (7), conditionne un mouvement de basculement orienté transversalement au mouvement linéaire pour l'accouplement de la crémaillère (6) à la roue dentée (5).

7. Tendeur de ceinture réversible selon la revendication 6, dans lequel un élément formant ressort (9) exerce, sur la crémaillère (6), une force dirigée à l'encontre de la position d'accouplement.

8. Tendeur de ceinture réversible selon la revendication 7, dans lequel l'élément formant ressort (9) vient en prise dans un alésage de la crémaillère (6).

9. Tendeur de ceinture réversible selon l'une des revendications 1 à 8, dans lequel un élément entraîné par un générateur de gaz pyrotechnique (7) présente une section en forme de piston (10) qui est disposée dans un cylindre (11), dans lequel une longueur de la section en forme de piston (10) et/ou une longueur du cylindre (11) sont dimensionnées de telle sorte que la section en forme de piston (10) est disposée à l'extérieur du cylindre (11) après la conclusion du processus d'accélération supplémentaire.

10. Tendeur de ceinture réversible selon l'une des revendications 1 à 9, dans lequel sont prévus plusieurs dispositifs d'accélération (3).

11. Tendeur de ceinture réversible selon l'une des revendications précédentes, dans lequel est prévue une transmission de tendeur de ceinture transmettant le mouvement de rotation de l'arbre (2) du moteur électrique à l'arbre de ceinture.

12. Procédé permettant de faire fonctionner un tendeur de ceinture réversible selon l'une des revendications précédentes, lequel tendeur de ceinture réversible présente un arbre de ceinture et une unité à moteur électrique permettant d'entraîner l'arbre de ceinture, dans lequel l'unité à moteur électrique présente un moteur électrique (1) présentant un rotor accouplé à un arbre (2) et au moins un dispositif d'accélération (3) comprenant au moins un entraînement pyrotechnique, dans lequel l'arbre (2) de l'unité à moteur électrique (1) est accouplé à l'arbre de ceinture, comprenant au moins les étapes suivantes :
- amorçage de l'entraînement pyrotechnique pour l'accélération momentanée de l'arbre (2) à partir d'une position de repos, dans lequel l'arbre de ceinture est ensuite accéléré au moyen du moteur électrique pour atteindre la vitesse de rotation de fonctionnement
- entraînement de l'arbre de ceinture au moyen du moteur électrique (1).
